# EUROPÄISCHE PATENTANMELDUNG

(11) **EP 0 572 880 A1**
(43) Veröffentlichungstag der Anmeldung: **08.12.1993**
(21) Anmeldenummer: 93108312.5
(22) Anmeldetag: 22.05.1993
(51) Int. Cl.: B62D 63/02, B62D 51/06, A63C 5/08, B63B 35/73

(54) **Mobile steuerbare Vorrichtung**

(30) Priorität: 04.06.1992 CH 1808/92
(71) Anmelder: M.C.M., Johannes U. Minder, AU-Maleny Q 4552 (AU)
(72) Erfinder: Minder, Johannes Ulrich, AU-Maleny Q 4552 (AU); Balgera, Didier, F-68480 Roppentzwiller (FR)
(74) Vertreter: Keller, René, Dr.

(57) **Zusammenfassung**

Eine mobile steuerbare Vorrichtung mit einer Antriebseinheit (1a, 1b, 2) weist ein an der Antriebseinheit (1a, 1b, 2) befestigtes und in Antriebsrichtung nach vorn ragendes Lenkgestänge (3, 7) auf. Dieses gibt zugleich die Antriebsrichtung vor und dient zum Uebertragen der Antriebskraft auf einen vor der Antriebseinheit auf antriebslosen fahrbaren Untersätzen stehenden Fahrer (8). Als fahrbare Untersätze eignen sich Rollschuhe, Rollbretter, Skier u.a.m.. Vorzugsweise umfasst das Lenkgestänge (3, 7) eine Sitzstange (7), auf welche sich der Fahrer (8) mit dem Gesäss abstützen kann.

## Beschreibung

### Stand der Technik

Fahrzeuge, mit denen sich eine oder mehrere Personen befördern lassen, gibt es in grosser Anzahl und unterschiedlichster Ausführung. Insbesondere kleine, motorisch angetriebene Einmannfahrzeuge sind wegen ihrer Flexibilität und ihrem geringen Platzbedarf beliebt. Dazu gehören z. B. Motorfahrräder, Motorräder, motorische Dreiräder und ähnliche Fahrzeuge. Reizvoll ist an solchen Fahrzeugen auch, dass sie sich für sportliche Wettkämpfe und zum reinen Vergnügen einsetzen lassen.

### Darstellung der Erfindung

Aufgabe der Erfindung ist es nun, eine neuartige Vorrichtung der eingangs genannten Art zu schaffen, die klein und flexibel ist und die sich in vielfältiger Weise sowohl gewerblich als auch zum Vergnügen einsetzen lässt.

Die erfindungsgemässe Vorrichtung zeichnet sich aus durch ein an der Antriebseinheit befestigtes und in Antriebsrichtung nach vorn ragendes und zugleich die Antriebsrichtung vorgebendes Lenkgestänge zum Uebertragen und Steuern der Antriebskraft auf resp. durch eine vor der Antriebseinheit auf antriebslosen fahrbaren Untersätzen stehenden Person (Fahrer).

Die erfindungsgemässe Vorrichtung stellt im Prinzip eine in Richtung und Leistung steuerbare Antriebskraft, d. h. sozusagen einen Hexenbesen dar. Die Steuerung wird von der sich am Lenkgestänge festhaltenden Person durchgeführt. Die Vorrichtung selbst kann sich also nicht steuern. Sie bildet nur einen hinteren Teil des "Gefährts", das durch die Vorrichtung und die vor ihr stehende Person gebildet wird. Es leuchtet ein, dass die erfindungsgemässe Vorrichtung ein völlig neues Fahrgefühl ermöglicht. Von daher ist die Vorrichtung geradezu prädestiniert, um auch als Sportgerät benutzt zu werden. Aus den nachfolgend erläuterten bevorzugten Merkmalen ergeben sich verschiedene Anwendungsgebiete für die Erfindung.

Mit Vorteil ist am vorderen Ende des Lenkgestänges mindestens ein Griff zum Regeln der Antriebsleistung der Antriebseinheit vorgesehen. Der mindestens eine Griff kann natürlich auch etwas nach hinten versetzt sein, wobei die zu befördernde Person die Griffe hinter ihrem Rücken betätigt.

Eine sichere Führung der Vorrichtung ergibt sich dann, wenn das Gestänge so ausgebildet ist, dass es von der vorwärts zu treibenden Person rittlings zwischen die Beine genommen werden kann. Falls ein schnelles Aussteigen erwünscht ist, kann es vorteilhaft sein, wenn das Lenkgestänge nicht zwischen die Beine genommen wird, sondern wenn man sich nur an einer Seite desselben hält resp. auf einer Seite abstützt.

Weniger ermüdend und bequem ist es, wenn das Lenkgestänge eine quer zur Antriebsrichtung ausgerichtete Sitzstange aufweist, auf welcher sich die Person mit ihrem Gesäss abstützen kann.

Aus Sicherheitsgründen ist es empfehlenswert, beim Griff einen Kontaktschalter vorzusehen, dessen Loslassen die Antriebseinheit abschaltet. Bei einem Sturz wird dadurch die Gefahr vermieden, dass die Person von hinten durch das ausser Kontrolle geratene Gerät angefahren wird.

Die Antriebseinheit ist möglichst klein ausgebildet und nahe am "Untergrund" (im weitesten Sinn zu verstehen) angeordnet. Gemäss einer besonders bevorzugten Ausführungsform ist das Lenkgestänge im wesentlichen eine in Antriebsrichtung schräg nach oben ragende Stange. Wahlweise, aber nicht zwingend, ist sie am Ende in die Horizontale abgewinkelt. Das abgewinkelte, horizontale Ende wird zwischen die Beine geklemmt. Die Länge und die Steilheit (Neigungswinkel) der Stange sollten so bemessen sein, dass der Abstand zwischen der Person und der Antriebseinheit mehr als ein Meter und weniger als zwei Meter beträgt und dass das vordere Ende des Lenkgestänges etwa auf Gesässhöhe hochragt. Das Lenkgestänge ist also mit Vorteil an die Schrittlänge des Fahrers angepasst.

Wenn der schräg nach oben ragende Teil des Lenkgestänges längenverstellbar ist, dann lässt sich die Höhe des vorderen Endes auf die Personengrösse abstimmen. Wenn das Lenkgestänge zudem abnehmbar oder faltbar ausgebildet ist, dann kann die Vorrichtung für Transportzwecke kompakt gemacht werden.

Gemäss einer ersten Variante umfasst die Antriebseinheit zwei, insbesondere genau zwei auf einer gemeinsamen Achse angebrachte Räder. Es handelt sich in diesem Fall um ein vorzugsweise einachsiges Gerät zur Verwendung auf Strassen und Pisten.

Die Achse und das Lenkgestänge stehen vorzugsweise in einer starren Relation zueinander. Insbesondere befindet sich die Achse zwischen einem nach hinten ragenden Motor der Antriebseinheit und dem nach vorne ragenden Lenkgestänge, so dass das durch das Eigengewicht des Motors auf die genannte Achse ausgeübte Drehmoment etwas grösser als das vom Eigengewicht des Lenkgestänges in entgegengesetzter Richtung wirkende Drehmoment ist.

Eine besonders gute Bremswirkung lässt sich dadurch erzielen, dass am hinteren Ende der Vorrichtung ein auf den Boden pressbarer Bremsklotz angeordnet ist. Der Abstand vom Boden ist nur gerade so gering gewählt, dass ein kleines Anheben des Lenkgestänges dazu führt, dass der Bremsklotz auf dem Untergrund aufsitzt und die Räder den Bodenkontakt verlieren. Dadurch ergibt sich eine gute Bremswirkung.

Gemäss einer zweiten Ausführungsvariante weist die Antriebseinheit zwei Raupen auf, so dass die Vorrichtung im Schnee oder für die Querfeldeinfortbewegung benutzt werden kann. Vorzugsweise umfasst die Antriebseinheit mindestens ein in den Boden ragendes Führungsschwert. Die zu befördernde Person steht auf konventionellen Skiern oder Raupenskiern für unebenes Gelände. Vorzugsweise dienen die Führungsschwerter auch als Schutz, damit die Raupen nicht auf die hinteren Enden der Skier fahren können. Ebenso empfiehlt es sich, die Raupen durch eine Schutzhaube abzudecken.

Gemäss einer dritten Variante ist die Vorrichtung zum Befördern einer auf Wasserskiern stehenden Person ausgebildet. Die Antriebseinheit umfasst dabei vorzugsweise einen Jetantrieb, der unten an einem Schwimmkörper angeordnet ist. Besonders vorteilhaft ist es, wenn auf der oberen Seite des Schwimmkörpers eine Sitzfläche ausgebildet ist zur Erleichterung der Startphase.

Eine Fahrerausrüstung gemäss der Erfindung umfasst antriebslose fahrbare Untersätze, insbesondere Rollschuhe, Rollbretter oder Skier und eine Vorrichtung der oben erläuterten Kennzeichnung.

Die erfindungsgemässe Fahrerausrüstung eignet sich zur Beförderung eines Kuriers, einer Ueberwachungsperson in Grossanlagen oder auf Skipisten usw.. Die Ausrüstung kann aber auch zu Vergnügungs- und Sportzwecken verwendet werden.

Aus der nachfolgenden Beschreibung und der Gesamtheit der Patentansprüche ergeben sich weitere vorteilhafte Ausführungsformen und Merkmalskombinationen der Erfindung.

### Kurze Beschreibung der Zeichnungen

Nachfolgend soll die Erfindung anhand von Ausführungsbeispielen und im Zusammmenhang mit den Zeichnungen näher erläutert werden. Es zeigen:
- Fig. 1a, b: Eine schematische Darstellung einer erfindungsgemässen Vorrichtung mit Rädern zur Verwendung auf ebenem Untergrund;
- Fig. 2a, b: eine schematische Darstellung einer erfindungsgemässen Vorrichtung mit Raupen zur Verwendung auf unebenem Untergrund;
- Fig. 3a, b: eine schematische Darstellung einer Vorrichtung mit einem Schwimmkörper zur Verwendung auf dem Wasser;
- Fig. 4: ein für die seitliche Stellung geeignetes Lenkgestänge.

Grundsätzlich sind in den Figuren gleiche Teile mit gleichen Bezugszeichen versehen.

### Wege zur Ausführung der Erfindung

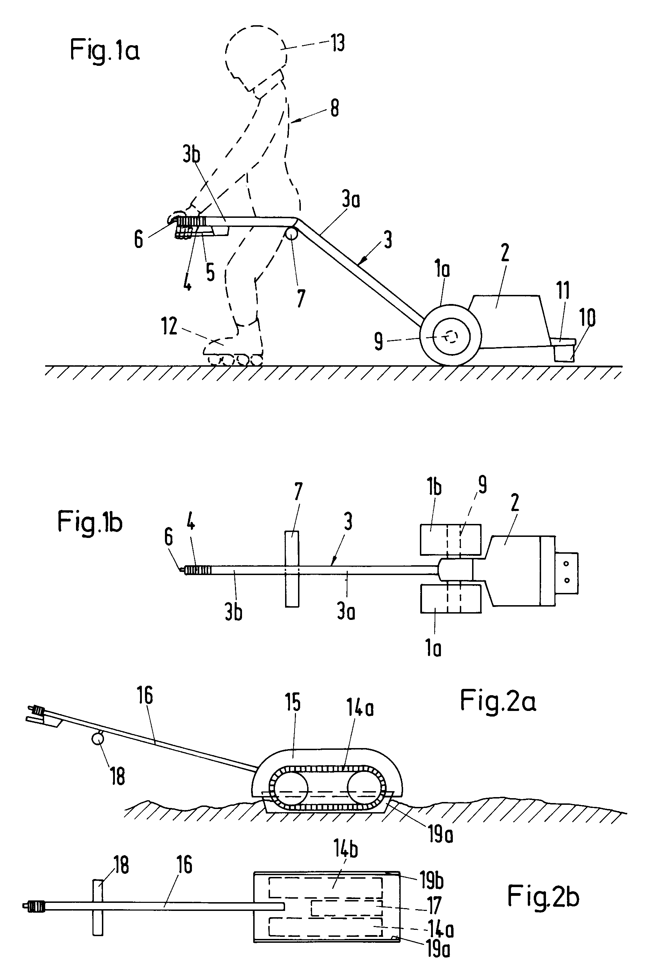

In den Figuren 1a, 1b ist eine erste Ausführungsvariante von der Seite resp. von oben dargestellt. Die Vorrichtung besteht im wesentlichen aus zwei auf einer gemeinsamen Achse 9 angeordneten Rädern 1a, 1b, einem Motor 2 und einem Lenkgestänge 3.

Die Räder sind verhältnismässig klein, typischerweise 20 bis 30 cm im Durchmesser. Sie werden mittels eines Getriebes, das in der Figur nicht näher dargestellt ist, vom Motor 2, der z. B. ein Benzinmotor ist, angetrieben. Die Antriebsleistung ist mit einem an sich bei Motorrädern bekannten Drehgriff 4 steuerbar. Der Drehgriff 4 befindet sich am vorderen Ende des Lenkgestänges 3. Ebenfalls am vorderen Ende des Lenkgestänges 3 ist ein Bremshebel 5 zum Bremsen der Räder 1a, 1b und ein Kontaktschalter 6 vorgesehen. Der Kontaktschalter 6 ist ein Sicherheitsschalter, der ständig gedrückt gehalten werden muss während der Fahrt. Wird er losgelassen, so stellt der Motor 2 unverzüglich ab.

Das Lenkgestänge 3 weist eine Stange 3a, 3b auf, die mit dem Motor 2 und der Achse 9 der beiden Räder 1a, 1b starr verbunden ist. Sie steigt von der Höhe der Radachse (10 bis 20 cm über Boden) bis etwa auf Gesässhöhe eines Fahrers 8 an (schräger Teil 3a). Danach folgt ein horizontal abgewinkelter Teil 3b der Stange. Dieser Teil wird vom Fahrer 8 rittlings zwischen die Beine genommen. Am horizontalen Teil 3b der Stange, vorzugsweise an der Stelle der Abwinklung ist eine Sitzstange 7 befestigt. Sie steht senkrecht zum Lenkgestänge 3 und damit senkrecht zur Antriebsrichtung. Auf ihr kann sich der Fahrer 8 mit seinem Gesäss abstützen. Sie ist z. B. 20 bis 40 cm lang und so ausgebildet, dass sie ein möglichst bequemes Fahren erlaubt.

Die erfindungsgemässe Vorrichtung steht somit auf den zwei Rädern 1a, 1b und ist um die Achse 9 wippbar. Der bezüglich der genannten Achse 9 nach hinten ragende Motor und das nach vorne ragende Lenkgestänge 3 halten sich in etwa die Balance. Vorzugsweise ist das vom Eigengewicht des Motors 2 auf die Achse 9 ausgeübte Drehmoment etwas grösser als das entgegengesetzt wirkende vom Eigengewicht des Lenkgestänges 3. Ohne Fahrer steht die Vorrichtung also mit ihrem hinteren Ende am Boden auf. Mit Vorteil ist der Auflagepunkt als Bremsklotz 10 ausgebildet, der z. B. auswechselbar an einer hinten am Motor 2 angeordneten Befestigungsplatte 11 angebracht ist.

Im folgenden soll nun beschrieben werden, wie die erfindungsgemässe Vorrichtung verwendet werden kann.

Der Fahrer 8 rüstet sich als erstes mit Rollschuhen 12 aus. Es handelt sich dabei vorzugsweise um welche, bei denen alle Räder auf einer gemeinsamen Linie (Fahrlinie) angeordnet sind. Es können aber durchaus auch Rollschuhe mit vier auf zwei Achsen angeordneten Rädern eingesetzt werden.

Für Betonpisten und Asphaltstrassen ist es aus Sicherheitsgründen empfehlenswert, Handschuhe, Knieschoner und/oder einen Helm 13 anzuziehen.

Wenn der Motor 2 eingeschaltet worden ist, nimmt der Fahrer 8 den horizontalen Teil 3b des Lenkgestänges 3 zwischen die Beine, so dass die Sitzstange 7 am Gesäss resp. an den Beinen anliegt. Aufgrund der weiter oben beschriebenen Gewichtsverteilung von Lenkgestänge 3 und Motor 2 bezüglich der Achse 9 wird der horizontale Teil 3b des Lenkgestänges 3 in angenehmer Weise leicht nach oben gedrückt. Mit einer Hand hält der Fahrer den Drehgriff 4 und den Bremshebel 5, wobei er gleichzeitig mit dem Daumen dieser Hand den Kontaktschalter 6 gedrückt hält. Die andere Hand ist im Prinzip frei, kann aber zur besseren Steuerung auf das Lenkgestänge gelegt werden.

Der Fahrer 8 geht leicht in die Knie und zwar mindestens so stark, dass der Bremsklotz 10 von der Piste abgehoben wird, und dann kann die Fahrt losgehen. Mit dem Drehgriff 4 wird die Antriebsleistung des Motors 2 gesteuert. Für leichtes Abbremsen kann der Bremsgriff 5 verwendet werden. Die Haftreibung der Räder kann dadurch vergrössert werden, dass der Fahrer 8 gleichzeitig mit dem Gesäss die Sitzstange 7 nach unten drückt und das vordere Ende (Drehgriff 4) mit der Hand nach oben zieht. Dadurch wird die Auflagekraft erhöht. Ein stärkeres Abbremsen kann dadurch bewirkt werden, dass der Fahrer 8 seine Knie durchstreckt, so dass der Bremsklotz 10 auf der Piste schleift und die Räder 1a, 1b abgehoben sind. Auch für diese Bremsmethode kann die Auflagekraft durch Hochziehen des vorderen Endes des Lenkgestänges erhöht werden.

Die Fahrtrichtung wird durch den Fahrer 8 vorgegeben. Dieser lenkt seine Rollschuhe 12 in die gewünschte Richtung, wobei ihm die Vorrichtung stets folgt, da die Antriebsrichtung die Richtung des Lenkgestänges 3 ist. Fahrer und Vorrichtung bilden zusammen also sozusagen ein zweiachsiges Gefährt.

Die Manövrierbarkeit ist umso besser, je geringer der Abstand zwischen dem Fahrer und den Rädern 1a, 1b ist. Bei zu geringem Abstand ist aber die Lenkung nicht mehr stabil, was natürlich nachteilig ist. Vorteilhaft ist es, wenn der Abstand zwischen dem Fahrer 8 und den Rädern 1a, 1b ein bis zwei Meter beträgt. Der geneigte Teil 3a des Lenkgestänges 3 ist entsprechend zu bemessen. Damit die Vorrichtung für Fahrer unterschiedlicher Grösse geeignet ist, ist es von Vorteil, wenn der geneigte Teil 3a längenverstellbar ist. Die Anpassung führt dazu, dass grosse Fahrer auch einen grösseren Abstand zur Achse 9 haben als kleine.

Fig. 2a und 2b zeigen eine zweite Ausführungsvariante von der Seite resp. von oben. Zur Verwendung auf einem unebenen oder weichen Untergrund (Erde resp. Schnee) umfasst der Antrieb zwei Raupen 14a, 14b. Diese werden in an sich bekannter Weise von einem andeutungsweise eingezeichneten Motor 17 angetrieben. Beide Raupen 14a, 14b werden von einer Schutzhaube 15 abgedeckt.

Die Steuerung der Vorrichtung und die Kraftübertragung auf den Fahrer erfolgt ähnlich wie bei Variante 1 (Fig. 1a, 1b). Ein Lenkgestänge 16 ist durch eine gerade Stange und eine Sitzstange 18, die senkrecht zur geraden Stange steht, gebildet. Im Unterschied zu der in den Figuren 1a, 1b gezeigten Ausführungsvariante ist das Lenkgestänge 16 am vorderen Ende gerade und nicht abgewinkelt. Die Mittel zum Steuern des Antriebs und zum Bremsen der Vorrichtung sind wie in Fig. 1a, 1b gezeigt ausgeführt.

An den Aussenseiten der Raupen 14a, 14b sind gemäss einer besonders bevorzugten Ausführungsform zwei Führungsschwerter 19a, 19b an der Vorrichtung angebracht, die gegenüber der Auflagefläche der Raupen 14a, 14b in den Untergrund hineindringen. Diese Führungsschwerter 19a, 19b sollen im übrigen auch verhindern, dass die Raupen aus Versehen auf den Hinterteil der Skier des Fahrers auflaufen können. Bei einem harten Untergrund verhindern nämlich diese Führungsschwerter 19a, 19b, dass die dazwischenliegenden Raupen 14a, 14b in den Untergrund eingreifen können.

Aufgrund der Unebenheiten ist es für ein bequemes Fahren von grossem Vorteil, wenn die Stange 16 in beschränktem Umfang gelenkig mit dem Antrieb verbunden ist. Die Stange 16 soll um eine horizontale Achse um z. B. 20° bis 30° schwenkbar beweglich sein, damit eine stampfende Bewegung der Antriebseinheit (Motor plus Raupen) nicht auf die Stange 16 übertragen wird. Eine Beweglichkeit um eine vertikale Achse existiert aber auch bei dieser Ausführung nicht, da sonst ein direktes Steuern der Vorrichtung verunmöglicht wird.

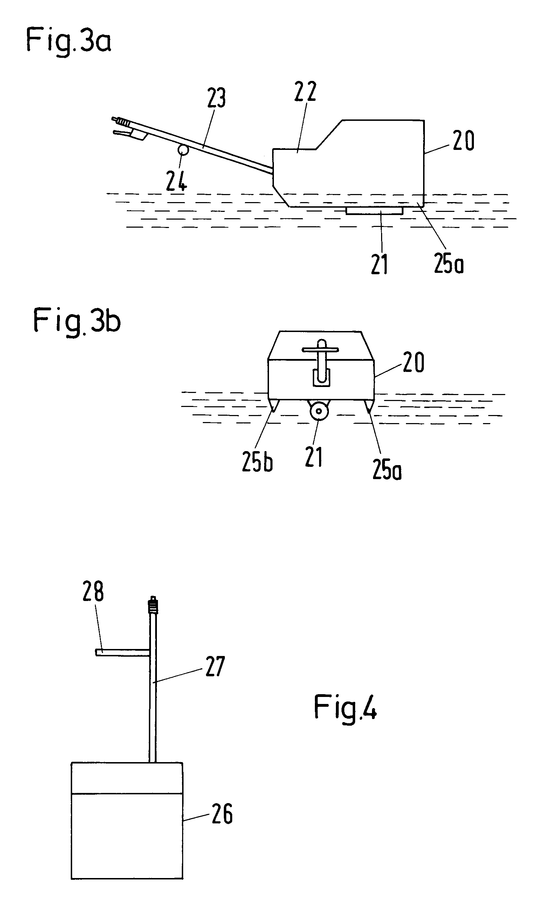

Fig. 3a, 3b zeigt eine Seiten- resp. Frontansicht einer dritten Ausführungsvariante, welche sich zur Fortbewegung auf dem Wasser eignet. Die Antriebseinheit umfasst hier einen Schwimmkörper 20 und einen Jetantrieb 21 (Wasserstrahlturbine). Auf dem Schwimmkörper 20 ist eine Sitzfläche 22 ausgebildet. An der vorderen Seite des Schwimmkörpers 20 ist ein Lenkgestänge 23 mit einer Sitzstange 24 angebracht. Sie ist wiederum als gerade Stange ausgebildet, kann aber auch ein abgewinkeltes vorderes Ende gemäss Fig. 1a, 1b aufweisen. Für eine saubere Führung weist der Schwimmkörper 20 z. B. zwei Schwerter oder Kufen 25a, 25b auf, die an den Längsseiten des Schwimmkörpers 20 nach unten ragen.

Die Sitzfläche 22 erleichtert die Startphase. Der mit Wasserskiern ausgerüstete Fahrer kann sich hinsetzen und die Vorrichtung beschleunigen, bis die zum Wasserskifahren minimal benötigte Geschwindigkeit erreicht ist. Dann zieht er sich am Lenkgestänge 23 nach vorne. Damit die Sitzstange 24 dabei nicht im Wege steht, kann sie schwenkbar ausgebildet sein. In der einen Schwenkstellung ist die Stange 24 parallel und in der anderen senkrecht zum Lenkgestänge 23. Für die Startphase wird die Sitzstange 24 demzufolge eingeklappt. Erst wenn sich der Fahrer nach vorn gezogen hat, klappt er die Sitzstange 24 aus, so dass er sich mit dem Gesäss auf ihr abstützen kann.

Ein Vergleich der soeben beschriebenen Ausführungsvarianten zeigt, dass die relevanten Merkmale der erfindungsgemässen Vorrichtung die folgenden sind:
1. Die Antriebseinheit befindet sich hinter dem Fahrer.
2. Der Fahrer hält sich an einem Lenkgestänge fest resp. stützt sich an diesem ab, wodurch die Kraftübertragung bewirkt wird.
3. Der Fahrer steuert seine fahrbaren Untersätze (Rollschuhe, Skier etc.) und gibt dadurch die Fortbewegungsrichtung vor. Das Lenkgestänge überträgt diese Richtung unmittelbar auf die Antriebseinheit.

Basierend auf diesen Grundprinzipien lassen sich verschiedenste mobile Vorrichtungen konstruieren. Im folgenden sollen Abwandlungen zu den oben erläuterten Beispielen kurz angedeutet werden.

Die Antriebsleistung wird mit Vorteil von einem kleinen, leichten und leistungsfähigen benzin-, gas-, elektrisch oder anders betriebenen Motor bezogen.

Das Lenkgestänge ist mit Vorteil eine gerade oder stückweise gerade (z. B. abgewinkelte) Stange. Es kann sich natürlich auch um ein stabiles und/oder zerlegbares und/oder faltbares Gestänge handeln. Wichtig ist nur, dass das Lenkgestänge einen bestimmten Abstand zwischen Fahrer und Antriebseinheit schafft und die Antriebsrichtung definiert. Es braucht nicht unbedingt rittlings benutzbar zu sein. Es ist durchaus auch denkbar, dass die Lenkstange links oder rechts am Fahrer vorbeiführt ("Skiliftbügelstellung"), so dass sich der Fahrer einfacher und schneller von der Vorrichtung trennen kann, wenn Gefahr droht. Eine solche seitliche Stellung kann z. B. beim Wasserskifahren von Vorteil sein.

Ein für die seitliche Stellung geeignetes Lenkgestänge ist in Fig. 4 dargestellt. Ein Schwimmer 26 (ähnlich wie in Fig. 3a, 3b ausgebildet) ist schematisch von oben dargestellt. Ein Lenkgestänge 27 ragt nach vorne. Es befindet sich nicht auf der Längsachse des Schwimmers 26, sondern ist leicht nach rechts verschoben. An geeigneter Stelle ist eine Sitzstange 28 rechtwinklig zur Antriebsrichtung angeordnet. Am vorderen Ende des Lenkgestänges 27 befinden sich wiederum Mittel zum Steuern der Antriebsleistung. Das Lenkgestänge 27 ist soweit von der Längsachse seitlich weg verschoben, dass der sich auf der Sitzstange 28 abstützende Fahrer in etwa in der Mitte, d. h. auf der Längsachse, stehen kann.

Der Schwimmer kann als kleiner geschlossener Bootskörper ausgebildet sein.

Die soeben beschriebene Ausbildung des Lenkgestänges kann auch bei den anderen Ausführungsformen der Erfindung angewendet werden.

Die Bedienelemente zum Steuern des Antriebs sind mit Vorteil am vorderen Ende des Lenkgestänges angeordnet. Sie können aber auch an einer anderen geeigneten Stelle montiert sein. Eine Variante stellt z. B. ein äusseres Ende der Sitzstange dar. Anstelle von Drehgriffen können andere vorzugsweise mit einer Hand bedienbare Schalt- resp. Regelgriffe eingesetzt werden.

Das Lenkgestänge kann auch T-förmig ausgebildet sein, wobei die Querstange die Sitzstange darstellt. Die Bedienungselemente (Gasgriff, Bremshebel etc.) sind z. B. aussen an der Sitzstange angeordnet. Das Fahrgefühl dürfte etwa demjenigen eines auf der Lenkstange seines Motorfahrrades sitzenden Fahrers entsprechen.

Weitere Kombinationen ergeben sich dadurch, dass die an verschiedenen Ausführungsvarianten beschriebenen Merkmale ausgetauscht und neu zusammengebracht werden.

Zusammenfassend kann festgehalten werden, dass durch die Erfindung eine neuartige steuerbare mobile Vorrichtung geschaffen worden ist, die sich nicht nur als Sportgerät, sondern als auch Antrieb im Nahverkehr eignet.

## Patentansprüche

1. Mobile steuerbare Vorrichtung mit einer Antriebseinheit, gekennzeichnet durch ein an der Antriebseinheit (2) befestigtes und in Antriebsrichtung nach vorn ragendes und zugleich die Antriebsrichtung vorgebendes Lenkgestänge (3) zum Uebertragen der Antriebskraft auf eine vor der Antriebseinheit (1a, 1b, 2) auf antriebslosen, fahrbaren Untersätzen (12) stehenden Person (8).

2. Vorrichtung nach Anspruch 1, dadurch gekennzeichnet, dass am vorderen Ende des Lenkgestänges (3) mindestens ein Griff (4, 5, 6) zum Regeln der Antriebsleistung vorgesehen ist.

3. Vorrichtung nach Anspruch 1 oder 2, dadurch gekennzeichnet, dass das Lenkgestänge (3) so ausgebildet ist, dass es von der vorwärts zu treibenden Person (8) rittlings zwischen die Beine genommen werden kann.

4. Vorrichtung nach Anspruch 3, dadurch gekennzeichnet, dass das Lenkgestänge (3) eine quer zur Antriebsrichtung am Lenkgestänge befestigte Sitzstange (7) aufweist, auf welcher sich die Person (8) mit dem Gesäss abstützen kann.

5. Vorrichtung nach einem der Ansprüche 2 bis 4, dadurch gekennzeichnet, dass beim Griff (4) ein Kontaktschalter (6) vorgesehen ist, dessen Loslassen die Antriebseinheit (2) abschaltet.

6. Vorrichtung nach einem der Ansprüche 1 bis 5, dadurch gekennzeichnet, dass das Lenkgestänge (3) im wesentlichen eine in Antriebsrichtung schräg nach oben ragende und vorzugsweise am Ende in die Horizontale abgewinkelte Stange (3a, 3b) umfasst.

7. Vorrichtung nach Anspruch 6, dadurch gekennzeichnet, dass der schräg nach oben ragende Teil (3a) der Stange längenverstellbar ist und dass das Lenkgestänge abnehmbar und/oder faltbar ausgebildet ist.

8. Vorrichtung nach einem der Ansprüche 1 bis 7, dadurch gekennzeichnet, dass die Antriebseinheit (1a, 1b, 2) zwei, insbesondere genau zwei auf einer gemeinsamen Achse angeordnete Räder (1a, 1b) aufweist.

9. Vorrichtung nach Anspruch 8, dadurch gekennzeichnet, dass die Achse (9) zwischen dem Lenkgestänge (3) und einem Motor (2) der Antriebseinheit (1a, 1b, 2) so angeordnet ist, dass das durch das Eigengewicht des Motors (2) auf die genannte Achse (9) ausgeübte Drehmoment grösser als das vom Eigengewicht des Lenkgestänges (3) erzeugte, entgegenwirkende Drehmoment ist.

10. Vorrichtung nach Anspruch 9, dadurch gekennzeichnet, dass am hinteren Ende der Vorrichtung ein auf den Boden pressbarer Bremsklotz (10) angeordnet ist.

11. Vorrichtung nach einem der Ansprüche 1 bis 7, dadurch gekennzeichnet, dass die Antriebseinheit (14a, 14b, 17) zwei Raupen (14a, 14b) und vorzugsweise mindestens ein in den Boden eindringendes Führungsschwert (19a, 19b) umfasst.

12. Vorrichtung nach Anspruch 11, dadurch gekennzeichnet, dass die Raupen (14a, 14b) durch eine Schutzhaube (15) abgedeckt sind.

13. Vorrichtung nach einem der Ansprüche 1 bis 7, dadurch gekennzeichnet, dass die Antriebseinheit (21) einen Jetantrieb umfasst, der unten an einem Schwimmkörper (20) angebracht ist.

14. Vorrichtung nach Anspruch 13, dadurch gekennzeichnet, dass auf der oberen Seite des Schwimmkörpers (20) eine Sitzfläche (22) ausgebildet ist.

15. Fahrerausrüstung, umfassend antriebslose fahrbare Untersätze, insbesondere Rollschuhe, Rollbretter oder Skier, gekennzeichnet durch eine Vorrichtung nach einem der Ansprüche 1 bis 14.

16. Verwendung der Fahrerausrüstung nach Anspruch 15 zur Beförderung einer Person.
